# EUROPEAN PATENT SPECIFICATION

(11) **EP 1 994 825 B1**
(45) Date of publication and mention of the grant of the patent: **20.01.2010**
(21) Application number: 08009408.9
(22) Date of filing: 21.05.2008
(51) Int. Cl.: A01K 89/01, A01K 89/015

(54) **Fishing reel**
Angelspule
Moulinet de pêche

(30) Priority: 24.05.2007 JP 2007137489
(43) Date of publication of application: 26.11.2008
(73) Proprietor: DAIWA SEIKO INC., Higashikurume-shi, Tokyo (JP)
(72) Inventor: Shimizu, Yoshito, Higashikurume-shi Tokyo (JP)
(74) Representative: Grünecker, Kinkeldey, Stockmair & Schwanhäusser Anwaltssozietät

(56) References cited:
- EP-A- 1 329 157
- DE-U1-202005 016 007
- JP-A- 10 113 102
- US-A- 5 333 813

## Description

### BACKGROUND OF THE INVENTION

The present invention relates to a fishing reel having a line clip device for clipping a fishline.

As disclosed in JP-UM-4-8780 and JP-3330481B, a line clip device (i.e., a fishline holder) for clipping a fishline has hitherto been provided at an appropriate part of a constructional element of a fishing reel, e.g., a side plate of a double-bearing reel or a spool of a spinning reel.

As illustrated in FIGS. 8 and 9, a line clip device 1 disclosed in JP-UM-4-8780 is configured so that a fishline holder support 11 having a through hole 9 is mounted in a mounting hole (through hole) 7 provided in a side plate 5 of a reel body 3, and that a stem part 13b of a line holder 13 having a large-diameter head portion 13a is inserted into the through hole 9 so as to be slidable in an up-down direction, as viewed in these figures, so that the stem part 13b is elastically caught by a spring member 15. Thus, a fishline can be clipped between the large-diameter head portion 13a of the line holder 13 and the fishline holder support 11 so as to be able to prevent the fishline from being slipped off from the line clip device 1.

Further, as illustrated in FIG. 10, a line clip device 17 disclosed in JP-3330481B is configured by way of example so that a through hole 21 is provided in a spool 19 of a spinning reel, that a slip-off preventing flange portion 23b is attached to one end side of a body portion 23a by being inserted into the through hole 21, and that a rubber fishline clipping member 23 formed integrally with a fishline clipping flange portion 23c is attached to the other end side of the body portion 23a by being inserted into the through hole 21. As illustrated in these figures, a fishline 25 is inserted between the fishline clipping flange portion 23c and the spool 19. Thus, the fishline 25 can elastically be clipped therebetween so as to be prevented from being slipped off from the line clip device 17.

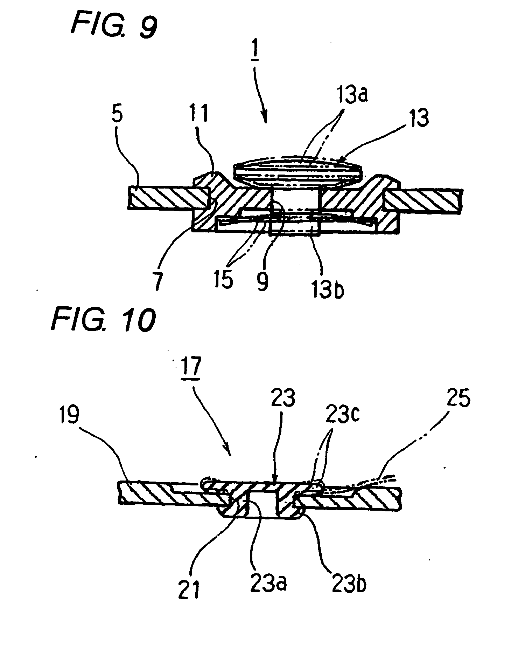

However, the line clip device illustrated in FIG. 9 has the following drawbacks due to a structure in which a fishline is sandwiched between the large-diameter head portion 13a of the line holder 13 and the fishline holder support 11. That is, when the spring force of the spring member 15 is increased, a fishline is deformed and damaged. Additionally, it becomes difficult for the line clip device 1 to clip a fishline.

Meanwhile, sometimes, the line clip device attached to the spool of a spinning reel has hitherto been used as what is called a "point memory". That is, when a predetermined amount of a fishline is played out, the fishline is clipped at a clipping position in the line clip device in order to prepare for re-playing-out of the fishline. In a case where the fishline is re-played out, when the re-playing-out of the fishline is stopped at the clipping position, a drastic load (i.e., line tension) is applied to a clipping portion (i.e., the large-diameter head portion 13a) of the line holder 13. Thus, the line clip device 1 has problems that the line holder 13 may be damaged by the drastic load, and that the fishline may dig into the space between the line holder 13 and the line holder support 11 and may be damaged and cut.

Meanwhile, the line clip device 17 disclosed in JP-3330481B uses the rubber fishline clipping member 23, so that a fishline can easily be inserted and clipped in between the constructional element 19 and the fishline clipping flange portion 23c. However, it has been pointed out that the line clip device 17a has the following drawbacks. That is, a fishline can easily be disengaged from the line clip device 17 because the outer peripheral portion of the fishline clipping flange portion 23c is easily deformed. Accordingly, the line clip device 17 lacks in reliability in clipping a fishline.

Moreover, in the aforementioned case of using the line clip device 17 as a "point memory", there is a fear that the fishline clippingmember 23 itself may drop off the constructional element 19 due to the drastic load. Thus, the line clip device 17 has a problem with practicality.

US 5 333 813 A according to the preamble of claim 1 discloses a fishing reel comprising a spool having a square hole. An outer member having a leg part is inserted through the square hole, wherein a spring is connected to the leg part to prevent the leg part from slipping off the square hole. An inner member is disposed between the outer member and a portion of the spool so that a fishline can be clipped between the outer member and the inner member.

### SUMMARY OF THE INVENTION

The invention is contrived in view of such circumstances. An object of the invention is to provide a fishing reel having a line clip device that can surely clip a fishline without damaging the fishline, and that can be undamaged and prevent a fishline from being damaged and cut when the line clip device is used as a "point memory".

In order to achieve the object, the present invention provides a fishing reel, according to claim 1, comprising:
a constructional element including a through hole formed through a predetermined part thereof;
a fishline clipping member including a fishline clipping portion and a stem portion inserted into the through hole;
a spring member for preventing the stem portion from slipping off the through hole and elastically supporting the stem portion; and
a buffer member mounted between the constructional element and the fishline clipping portion,
wherein the fishline clipping portion cooperates with the constructional element and the buffer member for elastically clipping a fishline, and
wherein the fishline is to be clipped between the buffer member and the constructional element.

Preferably, the fishline clipping portion is made of a metal material.

Preferably, a space portion is provided between the fishline clipping portion and the buffer member.

Preferably, a concave portion is provided in an opening edge portion of the through hole.

Preferably, the buffer member is made of a relatively hard resin material which can be elastically deformed.

Preferably, the buffer member includes an annular flange portion provided at the fishline clippingportion around the stemportion and a tubular portion which is formed integrally with the flange portion and is passed through the through hole.

Preferably, the constructional element is a spool for winding the fishline thereon.

The fishing reel of the invention can surely clip a fishline while preventing the fishline from being damaged, under synergistic effects of the spring force of the spring member, which pushes the fishline clipping portion against the constructional element, and the resilience of the buffer member.

Moreover, in a case where the line clip device is utilized as a "point memory", even when a drastic load (line tension) is applied to a fishline, the buffer member bends and reduces the load applied to the fishline. Consequently, the fishing reel of the invention can surely prevent the fishline clipping portion from being damaged, and prevent a fishline from being damaged and cut.

Further, the fishing reel of the invention has the following advantages. That is, as a result of forming the fishline clipping member of a metal material, the fishing reel can be used without trouble even under severe conditions. In addition, the inner buffer member can be protected from the aspect of strength.

According to the fishing reel of the invention, when a drastic load is applied to a fishline, the buffer member can largely bend toward the space portion. Consequently, the fishing reel of the invention canmore surelyprevent the fishline clipping portion from being damaged, and prevent a fishline from being damaged and cut.

According to the fishing reel of the invention, a fishline is dropped into the concave portion and is clipped by being surrounded by the concave portion. Consequently, the fishline can surely be clipped and held without difficulty.

### BRIEF DESCRIPTION OF THE DRAWINGS

FIG. 1 is a side view illustrating a spinning reel according to a first embodiment of the invention, to which each of the first to fourth fishing reels of the invention is applied.
FIG. 2 is a cutaway cross-sectional view illustrating a spool.
FIG. 3 is an enlarged cross-sectional view illustrating a line clip device.
FIG. 4 is an enlarged cross-sectional view illustrating the line clip device.
FIG. 5 is an enlarged cross-sectional view illustrating a line clip device mounted in a spinning reel according to a second embodiment of the invention, to which each of the first to fourth fishing reels of the invention is applied.
FIG. 6 is an enlarged cross-sectional view illustrating another line clip device mounted in the spinning reel according to the second embodiment of the invention, to which each of the first to fourth fishing reels of the invention is applied.
FIG. 7 is a plan view illustrating a double-bearing reel according to a third embodiment of the invention, to which each of the first to fourth fishing reels of the invention is applied.
FIG. 8 is a perspective view illustrating a double-bearing reel having a conventional line clip device.
FIG. 9 is an enlarged cross-sectional view illustrating the conventional line clip device.
FIG. 10 is an enlarged cross-sectional view illustrating another conventional line clip device.

### DETAILED DESCRIPTION OF PREFERRED EMBODIMENTS

Hereinafter, embodiments of the invention are described in detail with reference to the accompanying drawings.

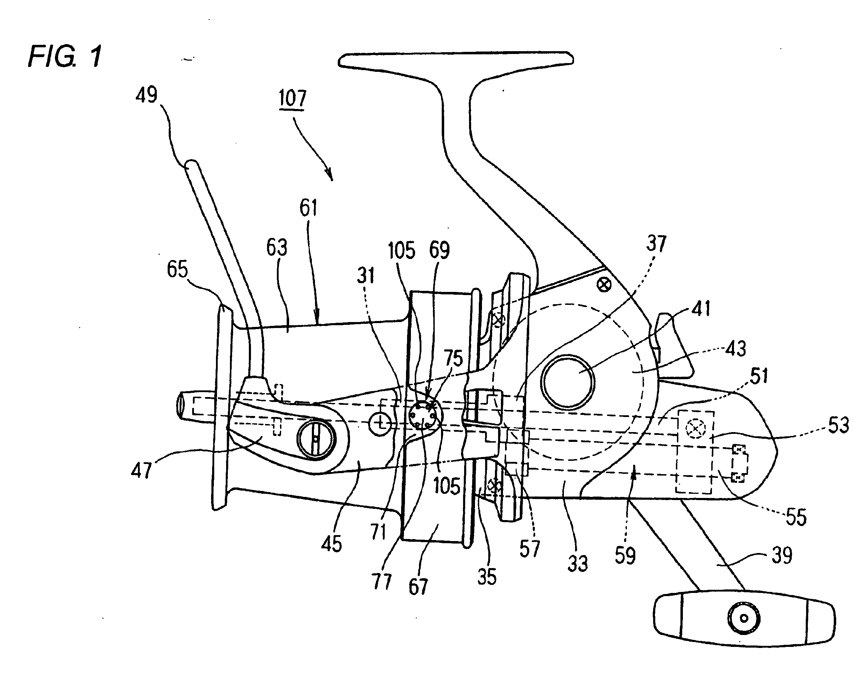

FIGS. 1 to 4 illustrate a first embodiment that is the application of each of the first to fourth fishing reels of the invention to a spinning reel. In FIG. 1, reference numeral 31 designates a hollow flier shaft rotatably journaled in a reel body 33 through a bearing. A rotor 35 is fixed to an end of the flier shaft with a known nut (not shown).

A drive gear 43 fixed to a handle shaft 41 of a handle 39 meshes with a pinion 97 provided at the rear end of a flier shaft 33. An operation of rotating the handle 39 is transmitted to the flier shaft 31 from the drive gear 43 through the pinion 37 to thereby rotate the rotor 35.

Paired support arms 45 are provided at the base portion of the rotor 35 so as to extend frontwardly from and integrally with the reel body 33. A bail support member 47 is provided at an end of each of both the bail support arms 45 pivotally between a fishline winding position and a fishline playing-out position. A semi-ring-like bail 49 is mounted between both the bail support members 47. A fishline guide portion (line roller) is rotatably attached to one of the bail support members 47.

In FIG. 1, reference numeral 51 designates a spool shaft attached to the reel body by being passed through the flier shaft 31. The spool shaft 51 is reciprocated in an anteroposterior direction of the reel body 33 by a known traverse mechanism 59, which includes a sliding element 53, a traverse cam shaft 55, and a driven gear 57 that meshes with the pinion 37, in synchronization with a winding operation of the handle 39 (i.e., a rotation of the rotor 35).

A spool (a constructional element of the spinning reel) is frictionally connected to an end of the spool shaft 51 by rotation-prevented fitting or a known drag mechanism.

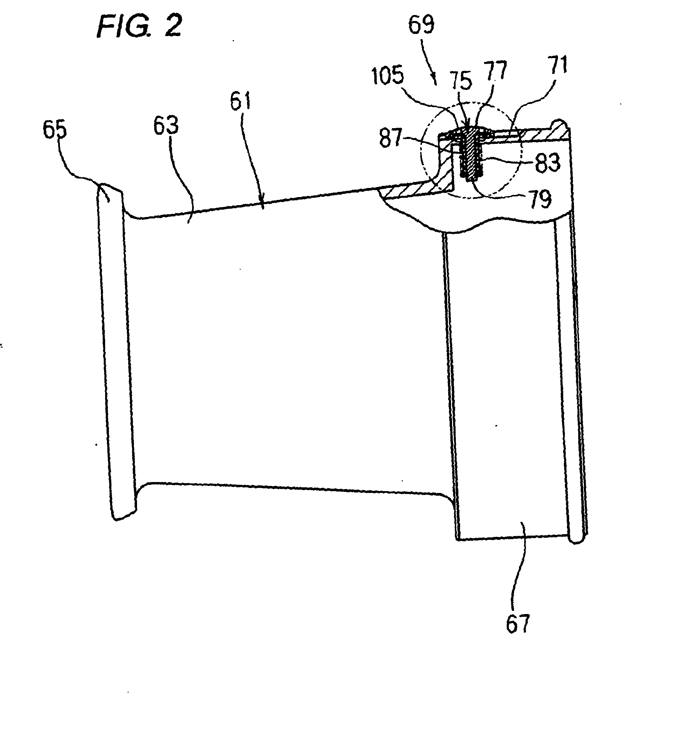

As illustrated in FIGS. 1 and 2, the spool 61 includes a fishline winding body portion 63 formed into a tapered shape (i.e., the diameter of the spool becomes gradually smaller toward a front direction), a front-side flange portion 65 formed frontwardly integrally with the fishline winding body portion 63, and a tubular skirt portion 67 formed rearwardly integrally with the fishline winding body portion 63. A line clip device 69 is provided on the skirt portion 67.

That is, as illustrated in FIGS. 1 to 4, a cutout concave portion 71 having a substantially V-shape in plan view is formed in an outer periphery of the skirt portion 67 by being directed to the fishline winding body portion 63. A through hole 73 is provided at a central part of the bottom portion of the cutout concave portion 71, which is located slightly to the fishline winding body portion 63. A stainless-steel fishline clipping member (or line clip) 75 is elastically caught in the through hole 73 so as to prevent the fishline clipping member 75 from slipping off.

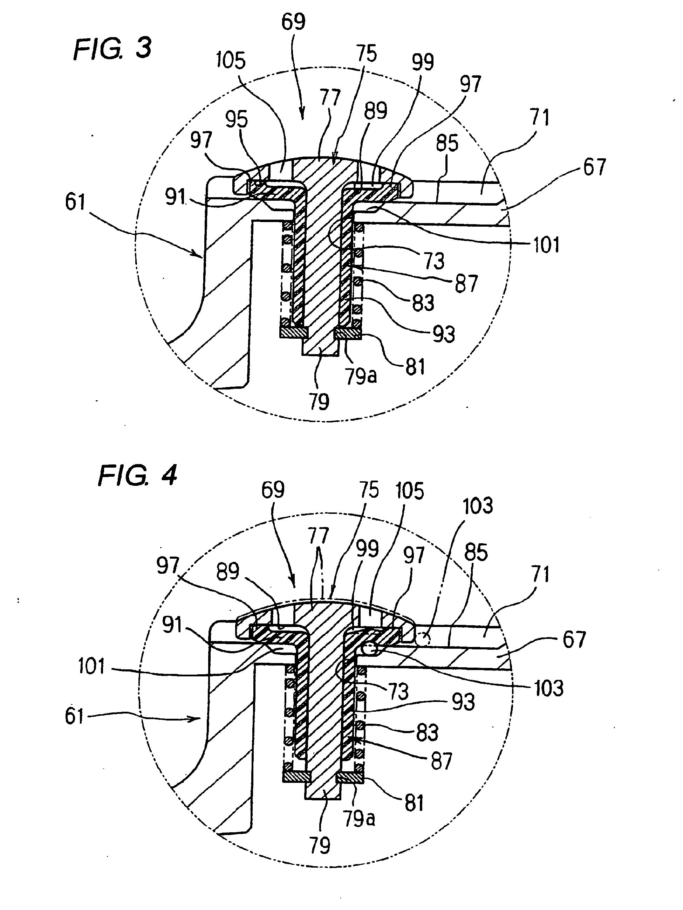

As illustrated in FIG. 3, the fishline clipping member 75 is shaped like an intake/exhaust valve for use in an intake/exhaust system of an internal combustion engine of a vehicle. The fishline clipping member 75 includes a fishline clipping portion 77, which has a circular shape in plan view and has a cross-sectionally arc-shaped top surface, and includes also a stem portion 79 extended downwardly from the central part of the fish line clipping portion 77.

A coil spring (spring member) 83 is wound between a stopper (e.g., an E-type snap ring) 81 caught in the front-side outer peripheral groove 79a of the stem portion and the inner periphery of the skirt portion 67. The fishline clipping portion 77 is pushed in a direction (radially and inwardly from the spool 61), in which the fishline clipping portion 77 is press-contacted with the bottom portion 85 of the concave portion 71, by the spring force of the coil spring 83. Then, the fishline clipping portion 75 is prevented by the stopper 81 from slipping off the through hole 73.

Further, in FIG, 3, reference numeral 87 denotes a buffer member (a fishline protection cushion part) attached between the fishline clipping member 75 and the skirt portion 67. The buffer member 87 includes an annular flange portion 91, which is accommodated in an annular concave portion 89 provided at the rear surface side of the fishline clipping portion 77 around the stem portion 79, and a tubular portion 93 which is formed integrally with the flange portion 91 and is passed through by the stem portion 79. The buffer member 87 is made of a relatively hard resin material (e.g., an acetal resin or an acrylonitrile butadiene styrene (ABS) resin), which can be elastically deformed.

Further, an annular projection 97, which abuts against a bottom part 95 of the annular concave portion 89, is erected on the peripheral edge part of the flange portion 91. As illustrated in FIG. 3, when the line clip device 69 is not used, the annular projection 97 abuts against the bottom part 95 of the annular concave portion 89. Thus, a space portion 99 is provided between the flange portion 91 (i.e., the buffer member 87) and the fishline clipping portion 77 (i.e., the fishline clipping member 75). Further, as already described, the fishline clipping portion 77 is pushed by the spring force of the coil spring 83 in a direction in which the fishline clipping portion 77 is press-contacted with the bottom part 85 of the cutout concave portion 71. As illustrated in FIG. 3, when the line clip device 69 is not used, the flange portion 91 of the buffer member 87 is press-contacted with the bottom part 85 of the cutout concave portion 71 by the fishline clipping portion 77 with the spring force of the coil spring 83.

Further, as illustrated in FIG. 3, a concave portion 101 is provided in an opening edge portion at the side of the cutout concave portion 71 of the through hole 73. When the fishline 103 is guided into the concave portion 101 from among the cutout concave portion 71, the fishline clipping member 75, and the buffer member 87, as illustrated in FIG. 4, the fishline 103 is dropped into the concave portion 101 while the flange portion 91 of the buffer member 87 is deformed by utilizing the space portion 99. The fishline 103 can surely be clipped due to the shape of the concave portion 101, the elastic force of the flange portion 91, and the spring force of the coil spring 83, which pushes the fishline clipping portion 77 against the spool 61.

In addition, as illustrated in FIGS. 1 and 3, the six design holes 105 are provided on the same circumference in the fishline clipping portion 77. Then, the surface of at least the flange portion 91 of the buffer member 75 is colored in, e.g., red. The inner red flange portion 91 can visually be checked through each of the design holes 105.

The line clip device 69 mounted in the spinning reel 107 according to the present embodiment is configured in this manner. Similarly to the conventional device, at practical fishing, the bail 49 is turned to the fishline playing-out position to thereby lower a fishing rod. Thus, the fishline 103 having been wound around the fishline winding body portion 63 is spirally unwound and is frontwardly played out. When the bail 49 is reversed to the fishline winding position while a winding operation of the handle 39 is performed, the fishline is guided from the bail 49 to a fishline guide portion. The fishline is wound around the spool 61 that is reciprocated in an anteroposterior direction in synchronization with a rotation of the rotor 35.

In order to clip the fishline 103 at the line clip device 69, it is useful to guide the fishline 103 into the concave portion 101 fromamong the cutout portion 71, the fishline clippingmember 75 (i.e., the fishline clipping portion 77), and the buffer member 87, as illustrated in FIG. 4. The fishline 103 is dropped into the concave portion 101 while the flange portion 91 of the buffer member 87 is deformed by utilizing the space portion 99. The fishline 103 is clipped in the concave portion 101 without difficulty due to the shape of the concaveportion 101, the elastic force of the flange portion 91, and the spring force of the coil spring 83, with which the fishline clipping portion 77 is pushed against the spool 61.

Moreover, in a case where the line clip device 69 is utilized as a "point memory", even when a drastic load (line tension) is applied to the fishline 103, the flange portion 91 of the buffer member 87 bends (or is elastically deformed) and reduces the load applied to the fishline 103.

This kind of a fishing reel, e.g., the spinning reel 107, is used under severe conditions. However, the fishline clipping member 75 made of a metal material protects the inner resin buffer member 87. The inner red flange portion 91 can visually be checked through the design hole 105 provided in the fishline clipping portion 77 of the fishline clipping member 75. Thus, the line clip device 69 serves as an accent in the design of the fishing reel, improves the appearance of the fishing reel and attracts the attention of purchasers.

Thus, the line clip device 69 according to the present embodiment can have the following advantages.
(1) The fishline 103 can surely be clipped while the fishline 103 is restrained from being damaged, under synergistic effects of the shape of the concave portion 101, the resilient force of the flange portion 91, and the spring force of the coil spring 83, which pushes the fishline clipping portion 77 against the spool 61. Further, because the fishline 103 is dropped into the concave portion 101 and is clipped by being surrounded by the concave portion 101, the fishline 103 can surely be clipped and held without difficulty.
(2) Moreover, in a case where the line clip device 69 is utilized as a "point memory", even when a drastic load (line tension) is applied to the fishline 103, the flange portion 91 of the buffer member 87 bends in the space portion 99 and reduces the load applied to the fishline 103. Thus, the fishline clipping portion 77 can surely be prevented from being damaged. Also, the fishline 103 can surely be prevented from being damaged and cut.
(3) Further, because the fishline clipping member 75 is made of ametal material, the fishing reel has the following advantages. That is, the fishing reel can be used without trouble even under severe conditions. In addition, the inner buffer member 87 made of a resin can be protected from the aspect of strength.
(4) Additionally, the inner red flange portion 91 can visually be checked through the design hole provided in the fishline clippingportion 77. Thus, the line clip device 69 of the present embodiment has advantages that the line clip device 69 serves as an accent in the design of the fishing reel and improves the appearance of the fishing reel thereby to attract the attention of purchasers and to stimulate their motivation.

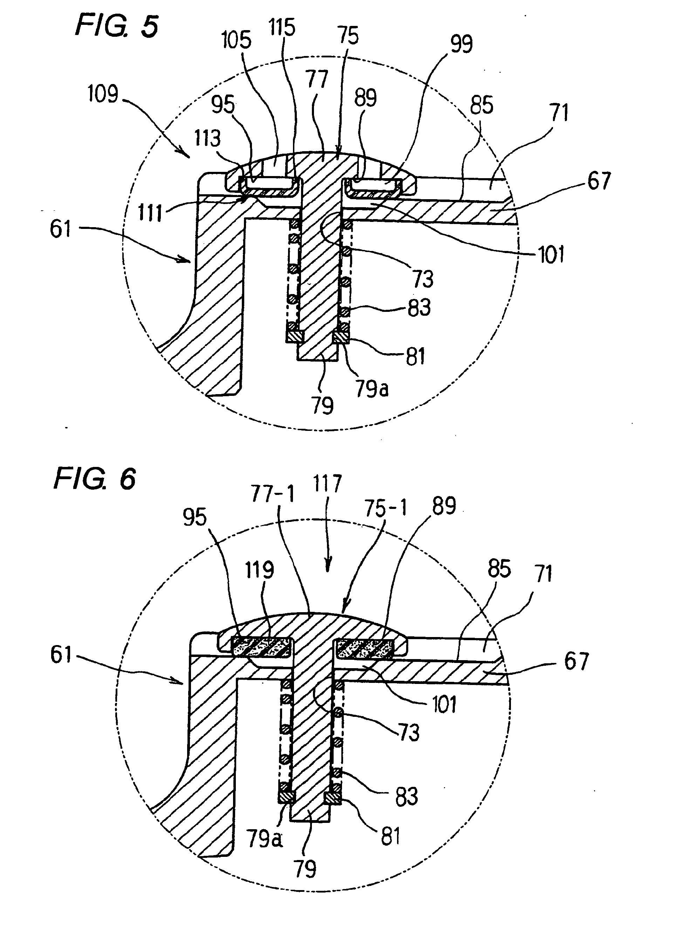

The shape of the buffer member is not limited to that of the buffer member 87 of the first embodiment. The buffer member can be shaped like a buffer member 111 of a line clip device 109, which is illustrated in FIG. 5, according to a second embodiment that is the application of each of the first to fourth fishing reels of the invention to a spinning reel. That is, the buffer member 111, which is made of the same material as that of the buffer member 87, can be formed into a doughnut-like shape inplanviewso that the buffer member 111 canbe accommodated in the annular concave portion 89 provided in the fishline clipping portion 75 and that the stem portion 79 of the fishline clipping member 75 is passed through the buffer member 111. In addition, annular flange portions 113 and 115, which abut against the bottom part 95 of the annular concave portion 89, can be provided on the outer periphery and the inner periphery of the buffer member 111. A space portion 99 can be provided between the buffer member 111 and the fishline clipping portion 77.

The remaining components are similar to those of the first embodiment illustrated in FIG. 1. Thus, such components are designated by the same reference numeral as that used in FIG. 1 to denote the same or corresponding component of the first embodiment. Therefore, the description of such components is omitted.

Thus, the present embodiment can achieve the desired object, similarly to the first embodiment. The buffer member 111 can visually be checked through the design hole 105 provided in the fishline clippingportion 77 by coloring the surface of the buffer member 111. Further, the colored buffering member 111 can serve as an accent in the design of the fishing reel to thereby improve the appearance of the fishing reel.

FIG. 6 illustrates a line clip device 117 attached to the spinning reel according to an embodiment that is the application of each of the first, second, and fourth fishing reels of the invention to a spinning reel. The line clip device 117 includes a buffer member 119 that is made of rubber and is formed in to a doughnut-like shape in plan view, instead of the buffer member 111. The buffer member 119 is formed so as to have a thickness at which the buffer member 119 can abut against the bottom part 95 of the annular concave portion 89 and the bottom part 85 of the cutout concave portion 71 when the line clip device 117 is not used. According to the present embodiment, no design holes are formed in a fishline clipping portion 77-1 of a fishline clipping member 75-1.

Incidentally, the remaining components are similar to those of the first embodiment illustrated in FIG. 1. Thus, such components are designated by the same reference numeral as that used in FIG. 1 to denote the same or corresponding component of the first embodiment. Therefore, the description of such components is omitted.

The fishline according to the present embodiment is configured in this manner. Thus, in order to clip a fishline in the line clip device 117, it is useful to guide the fishline into the concave portion 101 from among the cutout concave portion 71, the fishline clipping member 75-1, and the buffer member 119. The fishline is dropped into the concave portion 101 while the buffer member 119 is deformed. The fishline is clipped in the concave portion 101 without difficulty due to the shape of the concave portion 101, the elastic force of the buffer member 119, and the spring force of the coil spring 83, with which the fishline clipping portion 77-1 is pushed against the spool 61.

Moreover, in a casewhere the line clip device 117 is utilized as a "point memory", even when a drastic load (line tension) is applied to a fishline, the buffer member 119 bends and reduces the load applied to the fishline.

Additionally, the fishline clipping member 75-1 made of a metal material protects the inner buffer member 119.

Accordingly, the line clip device 117 according to the present embodiment can achieve the desired object, similarly to each of the aforementioned embodiments. Consequently, the line clip device 117 according to the present embodiment can surely clip and hold a fishline without difficulty. Further, the present embodiment has an advantage that in a case where the line clip device according to the present embodiment is utilized as the "point memory", the fishline clipping portion 77-1 can surely be prevented from being damaged, and a fishline can surely be prevented from being damaged and cut.

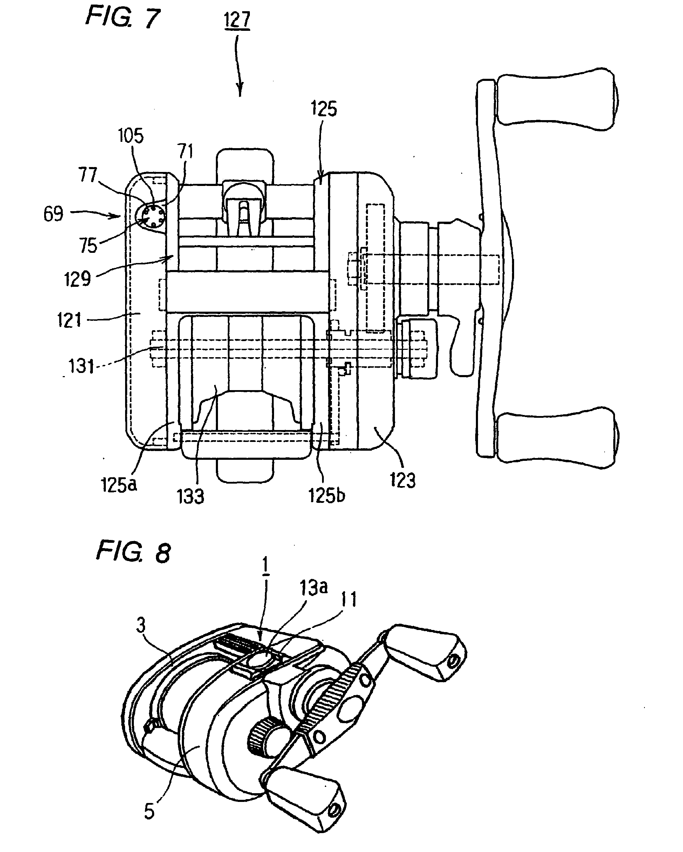

FIG. 7 illustrates a third embodiment that is the application of each of the first to fourth fishing reels of the invention to a double-bearing reel. In FIG. 7, reference numerals 121 and 123 designate side plates (i. e., constructional elements of the double-bearing reel) attached to the left and right frame elements 125a and 125b of a frame 125, respectively. A reel body 129 of a double-bearing reel 127 includes both side plates 121 and 123 and the frame 125.

Then, a spool 133 is rotatably supported between both the side plates 121 and 123 via the frame a spool shaft 131. The spool 133 is rotated in a fishline winding direction by a winding operation of a known handle 135. However, according to the present embodiment, a cutout concave portion 71 is provided at an upper frontward part of the side plate 121 opposed to the handle. A line clip device 69 having the same structure as that of the embodiment illustrated in FIG. 1 is mounted in the cutout concave portion 71.

Accordingly, the present embodiment can achieve the desired object, similarly to the line clip device 69 illustrated in FIG. 1. Consequently, the present embodiment can surely clip and hold a fishline without difficulty. Additionally, the present embodiment has an advantage that in a case where the line clip device according to the present embodiment is utilized as the "point memory", the fishline clipping portion 77 can surely be prevented from being damaged, and a fishline can surely be prevented from being damaged and cut.

Incidentally, in the aforementioned embodiments, the fishline clippingmembers 75 and 75-1 are made of a metal material. However, the fishline clipping members can be made of the same resin material as the material of the buffer member 75.

## Claims

1. A fishing reel comprising:
a constructional element (61) including a through hole (73) formed through a predetermined part thereof;
a fishline clipping member (75) including a fishline clipping portion (77) and a stem portion (79) inserted into the through hole (73);
a spring member (83) for preventing the stem portion (79) from slipping off the through hole (73) and elastically supporting the stem portion (79); and a buffer member (87) mounted between the constructional element (61) and the fishline clipping portion (77),
wherein the fishline clipping portion (77) cooperates with the constructional element (61) and the buffer member (87) for elastically clipping a fishline (103),
**characterized in that**
the fishline (103) is to be clipped between the buffer member (87) and the constructional element (61).

2. The fishing reel according to claim 1, wherein the fishline clipping portion (77) is made of a metal material.

3. The fishing reel according to any one of preceding claims, wherein a space portion (99) is provided between the fishline clipping portion (77) and the buffer member (87).

4. The fishing reel according to any one of preceding claims, wherein a concave portion (101) is provided in an opening edge portion of the through hole (73).

5. The fishing reel according to any one of preceding claims, wherein the buffer member (87) is made of a relatively hard resin material which can be elastically deformed.

6. The fishing reel according to any one of preceding claims, wherein the buffer member (87) includes an annular flange portion (91) provided at the fishline clipping portion (77) around the stem portion (79) and a tubular portion (93) which is formed integrally with the flange portion (91) and is passed through the through hole (73).

7. The fishing reel according to any one of preceding claims, wherein the constructional element (61) is a spool for winding the fishline (103) thereon.

## Patentansprüche

1. Angelspule, aufweisend:
ein Konstruktionselement (61), das eine Durchgangsbohrung (73) enthält, gebildet durch ein vorbestimmtes Teil desselben;
ein Angelschnurklemmteil (75), das einen Angelschnurklemmabschnitt (77) und einen Stempelabschnitt (79), eingesetzt in die Durchgangsbohrung (73), enthält;
ein Federteil (83), um den Stempelabschnitt (79) am Herausgleiten aus der Durchgangsbohrung (73) zu hindern und um den Stempelabschnitt (79) elastisch zu lagern; und
ein Dämpfungsteil (87), montiert zwischen dem Konstruktionselement (61) und dem Angelschnurklemmabschnitt (77),
wobei der Angelschnurklemmabschnitt (77) mit dem Konstruktionselement (61) und dem Dämpfungsteil (87) für ein elastisches Klemmen einer Angelschnur (103) zusammenwirkt,
**dadurch gekennzeichnet, dass**
die Angelschnur (103) vorgesehen ist, zwischen dem Dämpfungsteil (87) und dem Konstruktionselement (61) geklemmt zu werden.

2. Angelspule nach Anspruch 1, wobei der Angelschnurklemmabschnitt (77) aus einem metallischen Material hergestellt ist.

3. Angelspule nach einem der vorhergehenden Ansprüche, wobei ein Raumabschnitt (99) zwischen dem Angelschnurklemmabschnitt (77) und dem Dämpfungsteil (87) vorgesehen ist.

4. Angelspule nach einem der vorhergehenden Ansprüche, wobei ein konkaver Abschnitt (101) in einem Öffnungskantenabschnitt der Durchgangsbohrung (73) vorgesehen ist.

5. Angelspule nach einem der vorhergehenden Ansprüche, wobei das Dämpfungsteil (87) aus einem verhältnismäßig harten Kunstharzmaterial hergestellt ist, das elastisch verformt werden kann.

6. Angelspule nach einem der vorhergehenden Ansprüche, wobei das Dämpfungsteil (87) einen ringförmigen Flanschabschnitt (91) enthält, vorgesehen an dem Angelschnurklemmabschnitt (77) rund um den Stempelabschnitt (79), und einen rohrförmigen Abschnitt (93), der mit dem Flanschabschnitt (91) einstückig gebildet ist und durch die Durchgangsbohrung (73) hindurchgeführt ist.

7. Angelspule nach einem der vorhergehenden Ansprüche, wobei das Konstruktionselement (61) eine Spule zum Aufwickeln der Angelschnur (103) auf diese ist.

## Revendications

1. Moulinet de pêche, comprenant :
un élément de construction (61) comprenant un trou débouchant (73) formé à travers une partie prédéterminée de celui-ci ;
un élément de pincement de ligne de pêche (75) comprenant une partie de pincement de ligne de pêche (77) et une partie de tige (79) insérée dans le trou débouchant (73) ;
un élément de ressort (83) pour empêcher la partie de tige (79) de glisser du trou débouchant (73) et supportant élastiquement la partie de tige (79) ; et
un élément de butée (87) monté entre l'élément de construction (61) et la partie de pincement de ligne de pêche (77) ;
dans lequel la partie de pincement de ligne de pêche (77) agit de concert avec l'élément de construction (61) et l'élément de butée (87) pour pincer élastiquement une ligne de pêche (103),
**caractérisé en ce que**
la ligne de pêche (103) doit être pincée entre l'élément de butée (87) et l'élément de construction (61).

2. Moulinet de pêche selon la revendication 1, dans lequel la partie de pincement de ligne de pêche (77) est constituée d'un matériau métallique.

3. Moulinet de pêche selon l'une quelconque des revendications précédentes, dans lequel une partie d'espace (99) est disposée entre la partie de pincement de ligne de pêche (77) et l'élément de butée (87).

4. Moulinet de pêche selon l'une quelconque des revendications précédentes, dans lequel une partie concave (101) est disposée dans une partie de bord d'ouverture du trou débouchant (73).

5. Moulinet de pêche selon l'une quelconque des revendications précédentes, dans lequel l'élément de butée (87) est constitué d'un matériau de résine relativement dur qui peut être déformé élastiquement.

6. Moulinet de pêche selon l'une quelconque des revendications précédentes, dans lequel l'élément de butée (87) comprend une partie de flasque annulaire (91) disposée au niveau de la partie de pincement de ligne de pêche (77) autour de la partie de tige (79) et une partie tubulaire (93) formée intégralement avec la partie de flasque (91) et traversant le trou débouchant (73).

7. Moulinet de pêche selon l'une quelconque des revendications précédentes, dans lequel l'élément de construction (61) est une bobine pour enrouler la ligne de pêche (103) sur celui-ci.
